# EUROPÄISCHE PATENTSCHRIFT

(11) **EP 0 975 872 B1**
(45) Veröffentlichungstag und Bekanntmachung des Hinweises auf die Patenterteilung: **26.06.2002**
(21) Anmeldenummer: 98922660.0
(22) Anmeldetag: 08.04.1998
(51) Int. Cl.: F02N 11/10, F02N 11/08

(54) **ANLASSSPERRSYSTEM FÜR EIN KRAFTFAHRZEUG MIT EINEM AUTOMATGETRIEBE**
STARTER INTERLOCK SYSTEM FOR A MOTOR VEHICLE WITH AN AUTOMATIC GEAR BOX
SYSTEME D'ANTIDEMARRAGE POUR UN VEHICULE A MOTEUR EQUIPE D'UNE BOITE DE VITESSES AUTOMATIQUE

(30) Priorität: 14.04.1997 DE 19715384
(43) Veröffentlichungstag der Anmeldung: 02.02.2000
(73) Patentinhaber: ZF FRIEDRICHSHAFEN Aktiengesellschaft, 88038 Friedrichshafen (DE)
(72) Erfinder: ESCHRICH, Gerhard, D-88069 Tettnang (DE); HORSAK, Günther, D-88074 Meckenbeuren (DE); MÜLLER, Andreas, D-66280 Sulzbach (DE)
(86) Internationale Anmeldenummer: EP9802023
(87) Internationale Veröffentlichungsnummer: WO9846877

(56) Entgegenhaltungen:
- EP-A- 0 475 390
- DE-A- 3 303 455
- DE-C- 4 218 708
- US-A- 4 485 694
- FÖRSTER: "automatische fahrzeuggetriebe" 1991 , SPRINGER VERLAG XP002074879 in der Anmeldung erwähnt siehe Seite 344 - Seite 347 siehe Seite 392; Abbildung 10.48

## Beschreibung

Die Erfindung betrifft ein Anlaßsperrsystem für ein Kraftfahrzeug mit einem Automatgetriebe, bei dem ein Starten des Fahrzeugs verhindert wird, wenn ein von einem Fahrer betätigbarer Wählhebel sich in einer anderen Stellung als Parken oder Neutral befindet.

Automatgetriebe sind üblicherweise mit einem Anlaßsperrsystem ausgestattet. Dies dient dazu, daß ein Fahrzeug nur dann gestartet werden kann, wenn ein von einem Fahrer betätigbarer Wählhebel sich in der Position Neutral oder Parken befindet. Ein Starten des Fahrzeugs in einer Fahrposition, z. B. R oder D, wird hierdurch verhindert. Ein derartiges Anlaßsperrsystem weist folgende Baugruppen auf: Zündschloß, Anlasserrelais, Wählhebel, elektrischer Positionsschalter und eine elektronische Getriebesteuerung. Der elektrische Positionsschalter setzt die Stellung des Wählhebels in elektrische Signale um. In der Praxis kann dies so realisiert sein, daß der Positionsschalter auf einer drehbaren Welle angeordnet ist und der Positionsschalter im Inneren mehrere Leiterbahnen mit Schleifkontakten aufweist bzw. berührungslos arbeitet. Die Ausgangssignale des elektrischen Positionsschalters stellen in codierter Form, z. B. als 4-Bit-Code, die Position des Wählhebels dar. Diese Signale sind sodann auf die elektronische Getriebesteuerung geführt. Ebenfalls integraler Bestandteil des Positionsschalters sind zwei Kontakte. Der erste Kontakt dient zur Ansteuerung des Rückwärtsfahrscheinwerfers, wenn der Fahrer über den Wählhebel die Position R eingelegt hat. Der zweite Kontakt dient zur Ansteuerung der Anlaßfunktion. Dieser Kontakt kann als Schließer ausgeführt sein, d. h. bei sich in Position P oder N befindlichem Wählhebel ist dieser mechanische Kontakt geschlossen. In dieser Stellung besteht ein Strompfad vom Versorgungspotential via Zündschloß, Anlasserrelais und geschlossenem Positionsschalter zum Bezugspotential. Das Fahrzeug kann gestartet werden.

Das zuvor beschriebene Anlaßsperrsystem ist z. B. aus dem Buch "Automatische Fahrzeuggetriebe", H. J. Förster, Springer Verlag, 1991, Seiten 344 bis 347, bekannt. Die elektrische Ausführung des Positionsschalters aus dem gleichen Buch, Bild 10.48 auf der Seite 392, ist bekannt.

Eine neuere Entwicklungstendenz bei Automatgetrieben geht nun dahin, die Schnittstellen des Automatgetriebes zu reduzieren und die Elektronik in das Getriebeinnere zu verlegen. Diese Entwicklung ist unter dem Fachbegriff "Elektronik vor Ort" bzw. "Mechatronik" bekannt.

Ausgehend vom zuvor beschriebenen Stand der Technik liegt der Erfindung nunmehr die Aufgabe zugrunde, diesen in Richtung einer Anwendung als Elektronik vor Ort weiterzuentwickeln.

Die Aufgabe wird erfindungsgemäß gelöst, indem an der elektronischen Getriebesteuerung zwei Versorgungsspannungen anliegen, wobei die erste Versorgungsspannung permanent anliegt und die zweite Versorgungsspannung dann anliegt, wenn das Zündschloß in die erste Stellung verbracht wird. Mit Anliegen der zweiten Versorgungsspannung wird sodann die elektronische Getriebesteuerung aktiviert, die ihrerseits den Positionsschalter und den Anlaßschalter bestromt. Der Anlaßschalter wird nicht aktiviert, wenn die Signale des Positionsschalters eine Fahrstellung anzeigen, so daß mit Verbringen des Zündschlosses in die zweite Stellung das Anlasserrelais deaktiviert bleibt. Der Anlaßschalter befindet sich hierbei innerhalb des Automatgetriebes und ist als Halbleiterschalter ausgeführt. Über eine rückgemeldete Größe erkennt die elektronische Getriebesteuerung den Zustand des Anlaßschalters.

Die erfindungsgemäße Lösung bietet den Vorteil, daß sowohl der Positionsschalter als auch der Anlaßschalter integraler Bestandteil des Automatgetriebes sind. Durch die Verwendung eines Halbleiterschalters als Anlaßschalter wird zusätzlich der Vorteil erreicht, daß dieser kurzschlußfest ist.

In einer Ausgestaltung der Erfindung wird vorgeschlagen, daß die elektronische Getriebesteuerung mittels der ersten Versorgungsspannung aktiviert wird, wenn die rückgemeldete Größe des Anlaßschalters anzeigt, daß das Zündschloß in die zweite Stellung verbracht worden ist und gleichzeitig eine nicht anliegende zweite Versorgungsspannung festgestellt wird. Diese Ausgestaltung trägt wesentlich zur Betriebssicherheit des Fahrzeugs bei. Hierbei wurde davon ausgegangen, daß infolge einer Leitungsunterbrechung die zweite Versorgungsspannung an der elektronischen Getriebesteuerung nicht anliegt. Die elektronische Getriebesteuerung wird sodann über die rückgemeldete Größe des Anlaßschalters aktiviert. Diese rückgemeldete Größe tritt dann auf, wenn der Fahrer das Zündschloß in die zweite Stellung verbringt, also dann, wenn er beabsichtigt, das Fahrzeug zu starten. Nachdem die elektronische Getriebesteuerung aktiviert wurde, wird sodann der Positionsschalter und der Anlaßschalter bestromt. Der Anlaßschalter wird vom Positionsschalter in Abhängigkeit der Wählhebelstellung gesteuert. Eine fehlerfreie Funktion des Anlaßsperrsystems, d. h. ein Verhindern des Startens in einer Fahrposition, ist somit auch dann gewährleistet, wenn an der elektronischen Getriebesteuerung die zweite Versorgungsspannung fehlt.
Über die Verwendung der rückgemeldeten Größe als Signal zur Aktivierung der elektronischen Getriebesteuerung wird der Vorteil erzielt, daß keine redundante, permanente Versorgungsspannung dem Halbleiterschalter zugeführt werden muß.

In einer Ausgestaltung der Erfindung wird vorgeschlagen, daß die elektronische Getriebesteuerung zusätzlich einen Funktionsblock aufweist, mittels dem eine Selbsthaltung der rückgemeldeten Größe des Anlaßschalters erfolgt. Zusätzlich wird vorgeschlagen, daß der Funktionsblock eine Zeitstufe aufweist, wobei in einer weiteren Ausgestaltung vorgeschlagen wird, daß nach Ablauf der Zeitstufe die Selbsthaltung beendet wird, so daß der Funktionsblock deaktiviert ist.
Über diese Ausgestaltungen wird der Vorteil erzielt, daß selbst dann, wenn der Fahrer das Zündschloß unmittelbar von der Stellung zwei wieder in die Stellung eins überführt, die elektronische Getriebesteuerung über die Selbsthaltefunktion dennoch aktiviert wird.

In der Zeichnung ist ein bevorzugtes Ausführungsbeispiel dargestellt.

Es zeigen:
- Fig. 1: ein Systemschaubild und
- Fig. 2: eine ODER-Verknüpfung der beiden Versorgungsspannungen.

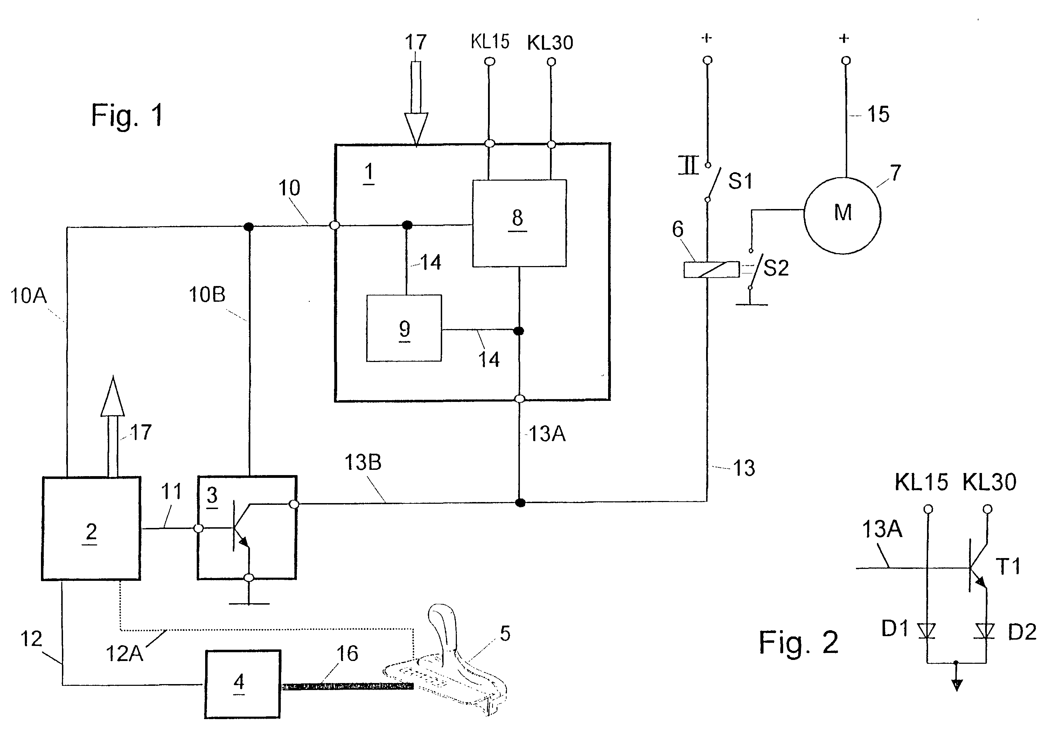

Fig. 1 zeigt ein Systemschaubild, bestehend aus einer elektronischen Getriebesteuerung 1, einem Wählhebel 5, einem Wählschieber 4, einem elektrischen Positionsschalter 2, einem Anlaßschalter 3 und einem Anlasserrelais 6. Der elektrische Positionsschalter 2, der Anlaßschalter 3 und der Wählschieber 4 sind hierbei integraler Bestandteil des Automatgetriebes. Die elektronische Getriebesteuerung 1 kann ebenfalls integraler Bestandteil des Automatgetriebes sein, indem sie z. B. eine gemeinsame Einheit mit dem hydraulischen Steuergerät bildet. Die elektronische Getriebesteuerung zeigt in stark vereinfachter Form eine Steuerelektronik 8 und einen Funktionsblock 9. Daneben zeigt Fig. 1 noch einen Schalter S1, der das Zündschloß darstellt, einen Anlasser M, Bezugszeichen 7, und einen mit dem Anlasserrelais 6 verbundenen Schließkontakt S2.
Die Funktion des Anlaßsperrsystems im fehlerfreien Zustand ist folgendermaßen: Im Ausgangszustand, d. h. das Zündschloß befindet sich in der Stellung Null, liegt an der elektronischen Getriebesteuerung 1 lediglich die erste Versorgungsspannung KL30 an. Die elektronische Getriebesteuerung 1 ist nicht aktiviert. Von der elektronischen Getriebesteuerung 1 führt eine Ausgangsleitung 10 mit den Zweigen 10A und 10B zum elektrischen Positionsschalter 2 und zum Anlaßschalter 3. Die Leitung 10 dient der Spannungsversorgung des elektrischen Positionsschalters 2 und Anlaßschalters 3. Im nicht aktivierten Zustand ist die Leitung 10 spannungslos. Da der elektrische Positionsschalter 2 stromlos ist, liefert er somit auch keine Ausgangssignale 17 an die elektronische Getriebesteuerung 1. Verbringt nun ein Fahrer das Zündschloß in die Stellung I, so liegt an der elektronischen Getriebesteuerung eine zweite Versorgungsspannung KL15 an. Sobald die zweite Versorgungsspannung an der elektronischen Getriebesteuerung 1 anliegt, wird diese aktiviert. Als Folge hiervon werden sodann der elektrische Positionsschalter 2 und der Anlaßschalter 3 bestromt. Der elektrische Positionsschalter 2 dedektiert über eine Verbindung 12 die Position eines Wählschiebers 4. Selbstverständlich ist es auch möglich, daß der Positionsschalter 2 direkt die Stellung des Wählhebels 5 dedektiert, wie dies in Fig. 1 mit Bezugszeichen 12A gestrichelt dargestellt ist. Der Wählschieber 4 befindet sich hierbei innerhalb eines nicht dargestellten Hydrauliksteuergerätes des Automatgetriebes. Der Wählschieber 4 seinerseits ist über eine mechanische Verbindung 16, z. B. ein Gestänge, mit einem Wählhebel 5 verbunden. Über diesen Wählhebel kann der Fahrer die Position des Automatgetriebes bestimmen. Üblicherweise besitzt ein derartiger Wählhebel die Position P, R, N, D usw. Der elektrische Positionsschalter 2 wandelt die Position des Wählschiebers 4 bzw. des Wählhebels in elektrische Ausgangssignale 17 um. Diese können z. B. als 4-Bit-Code dargestellt sein. Über die Ausgangssignale 17, die auf die elektronische Getriebesteuerung 1 geführt sind, erkennt diese die über den Wählhebel 5 eingelegte Position. Geht man nun davon aus, daß der Wählhebel 5 sich in der Position P oder N befindet, so aktiviert der elektronische Positionsschalter 2 über die eine Leitung 11 den Anlaßschalter 3. Der Anlaßschalter 3 ist hierbei als Halbleiterschalter ausgeführt. Im aktivierten Zustand besteht somit eine Verbindung von einer Leitung 13B zum Bezugspotential. Der elektrische Positionsschalter 2 kann hierbei, wie aus dem Stand der Technik bekannt, als mechanischer Schalter oder als Hall-Element ausgeführt sein. Der Anlaßschalter 3 ist kurzschlußfest. Beabsichtigt nun ein Fahrer, das Fahrzeug zu starten, so verbringt er das Zündschloß in eine Stellung II. Dadurch wird der Schalter S1 in einer Leitung 13 geschlossen, d. h., es besteht somit ein Strompfad vom Plus-Potential (+) über Schalter S1, Anlasserrelais 6 via Leitung 13, 13B und Anlaßschalter 3 zum Bezugspotential. Als Folge hiervon wird das Anlasserrelais 6 betätigt und schließt seinerseits einen Schalter S2, so daß der Anlasser M, Bezugszeichen 7, via Leitung 15 betätigt wird. Bei einem zweiten Beispiel wird nun davon ausgegangen, daß die zweite Versorgungsspannung KL15 an der elektronischen Getriebesteuerung 1 nicht anliegt. Dies kann z. B. aufgrund einer Leitungsunterbrechung oder einer defekten Sicherung, die in der Spannungszuführung angeordnet ist, auftreten. Verbringt der Fahrer das Zündschloß aus der Stellung Null in die Stellung I, so verbleibt die elektronische Getriebesteuerung 1 im inaktiven Zustand. Wird das Zündschloß jetzt in Stellung II verbracht, so liegt via Schalter S1, Anlasserrelais 6, Leitung 13 und Leitung 13A die Versorgungsspannung, üblicherweise 12 V, an der elektronischen Getriebesteuerung 1 an. Über das jetzt auftretende Potential auf der Leitung 13A wird die elektronische Getriebesteuerung 1 aktiviert, das sogenannte "wake up". Die erste Versorgungsspannung KL30 dient hierbei als Ersatz für die fehlende zweite Versorgungsspannung KL15. Hierzu sind die beiden Versorgungsspannungen über eine ODER-Funktion verschaltet. Die konkrete Ausgestaltung dieser ODER-Funktion ist in Fig. 2 dargestellt. Die erste Versorgungsspannung KL30 wird lediglich für den Startvorgang zugeschaltet. Nachdem die elektronische Getriebesteuerung 1 aktiviert ist, bestromt diese via Leitung 10 und Zweige 10A und 10B den elektrischen Positionsschalter 2 und Anlaßschalter 3. Der weitere Ablauf erfolgt wie bei Beispiel 1 beschrieben.
Die elektronische Getriebesteuerung 1 weist zusätzlich einen Funktionsblock 9 auf. Dieser ist in einem Rückkopplungszweig 14 angeordnet. Der Rückkopplungszweig 14 führt von der Leitung 10 zur Leitung 13A. Aufgabe des Rückkopplungszweigs 14 mit dem Funktionsblock 9 ist es, eine Selbsthaltung der Leitung 13A zu gewährleisten, d. h., selbst für den Fall, daß der Fahrer im zweiten Beispiel unmittelbar das Zündschloß aus der Stellung II in die Stellung I verbringt, ist gewährleistet, daß die elektronische Getriebesteuerung 1 mittels der Selbsthaltung aktiviert bleibt. Der Funktionsblock 9 beinhaltet zusätzlich eine Zeitstufe. Nach Ablauf der Zeitstufe ist die Selbsthaltung deaktiviert. Diese Zeitstufe ist hierbei so gewählt, daß die Zeitdauer für den Start des Motors ausreicht. Über das Verbringen des Wählhebels 5 in eine Fahrposition wird sodann mittels des Wählschiebers 4 rein hydraulisch eine Fahrstufe bzw. ein Notfahrgang eingelegt.

In Fig. 2 ist eine ODER-Verknüpfung der ersten und zweiten Versorgungsspannung dargestellt. Im fehlerfreien Betrieb liegt an der ersten Versorgungsspannung KL30 permanent die Batteriespannung, z. B. 12 V, an. Die Leitung 13A ist stromlos, so daß der Transistor T1 im gesperrten Zustand sich befindet. Hierdurch wird verhindert, daß eine zusätzliche Stand-by-Stromaufnahme bei abgestelltem Fahrzeug erfolgt. Mit Übergang des Zündschlosses aus der Stellung Null in die Stellung I liegt ein Spannungspotential an der zweiten Versorgungsspannung KL15 an. Hierdurch wird die Diode D1 leitend und aktiviert die elektronische Getriebesteuerung 1.
Bei Leitungsunterbrechung der zweiten Versorgungsspannung KL15 liegt kein Spannungspotential an. Beim Übergang des Zündschlosses von der Stellung I in die Stellung II wird nun, wie bei Fig. 1 beschrieben, das Plus-Potential der Batterie über die Leitung 13A an den Transistor T1 geführt, so daß dieser geschaltet wird. Hierdurch wird die erste Versorgungsspannung KL30 über die Diode D2 an die elektronische Getriebesteuerung 1 geschaltet, so daß diese aktiviert wird. Die erste Versorgungsspannung KL30 dient somit als Ersatz zur Aktivierung der elektronischen Getriebesteuerung 1 bei Ausfall der zweiten Versorgungsspannung KL15. Die Positionen Parken oder Neutral werden somit auch bei fehlender zweiter Versorgungsspannung fehlerfrei erkannt.

### Bezugszeichen

- 1: elektrische Getriebesteuerung
- 2: elektrischer Positionsschalter
- 3: Anlaßschalter
- 4: Wählschieber
- 5: Wählhebel
- 6: Anlasserrelais
- 7: Anlasser
- 8: Steuerelektronik
- 9: Funktionsblock
- 10: Leitung
- 11: Leitung
- 12: Verbindung
- 12A: Leitung
- 13: Leitung
- 14: Rückkopplungszweig
- 15: Leitung
- 16: mechanische Verbindung
- 17: Signal Positionsschalter

## Patentansprüche

1. Anlaßsperrsystem für ein Kraftfahrzeug mit einem Automatgetriebe, bei dem ein Starten des Fahrzeuges verhindert wird, wenn ein von einem Fahrer betätigbarer Wählhebel (5) sich in einer anderen Stellung als Parken oder Neutral befindet, das Anlaßsperrsystem ein Zündschloß (S1) mit einer ersten und zweiten Stellung, ein Anlasserrelais (6), einen Wählhebel (5), einen elektrischen Positionsschalter (2) mit Anlaßschalter (3) und eine elektronische Getriebesteuerung (1) aufweist, wobei die Stellung des Wählhebels (5) vom elektrischen Positionsschalter (2) dedektiert wird und die elektronische Getriebesteuerung (1) aufgrund der Signale des Positionsschalters (2) die Stellung des Wählhebels (5) erkennt, **dadurch gekennzeichnet, daß** an der elektronischen Getriebesteuerung (1) zwei Versorgungsspannungen anliegen, die erste Versorgungsspannung (KL30) permanent anliegt, die zweite Versorgungspannung (KL15) dann anliegt, wenn das Zündschloß (S1) in die erste Stellung verbracht wird, mit Anliegen der zweiten Versorgungsspannung (KL15) das elektronische Getriebesteuergerät (1) aktiviert wird, das elektronische Getriebesteuergerät (1) im aktivierten Zustand den Positionsschalter (2) und den Anlaßschalter (3) bestromt, wobei der Anlaßschalter (3) nicht aktiviert wird, wenn die Signale (17) des Positionsschalters (2) eine Fahrstellung anzeigen, so daß mit Verbringen des Zündschlosses (S1) in die zweite Stellung das Anlasserrelais (6) deaktiviert bleibt, wobei der Anlaßschalter (3) sich innerhalb des Automatgetriebes befindet, dieser als Halbleiterschalter ausgeführt ist und die elektronische Getriebesteuerung (1) über eine rückgemeldete Größe den Zustand des Anlaßschalters (3) erkennt.

2. Anlaßsperrsystem nach Anspruch 1, **dadurch gekennzeichnet, daß** die elektronische Getriebesteuerung (1) mittels der ersten Versorgungsspannung (KL30) aktiviert wird, wenn die rückgemeldete Größe des Anlaßschalters (3) anzeigt, daß das Zündschloß (S1) in die zweite Stellung verbracht worden ist und gleichzeitig eine nicht anliegende zweite Versorgungsspannung (KL15) festgestellt wird.

3. Anlaßsperrsystem nach Anspruch 2, **dadurch gekennzeichnet, daß** in der elektronischen Getriebesteuerung (1) die erste (KL30) und zweite Versorgungsspannung (KL15) über eine ODER-Verknüpfung miteinander verbunden sind.

4. Anlaßsperrsystem nach Anspruch 3, **dadurch gekennzeichnet, daß** die elektronische Getriebesteuerung (1) zusätzlich einen Funktionsblock (9) aufweist, mittels dem eine Selbsthaltung der rückgemeldeten Größe des Anlaßschalters (3) erfolgt.

5. Anlaßsperrsystem nach Anspruch 4, **dadurch gekennzeichnet, daß** der Funktionsblock (9) zusätzlich eine Zeitstufe aufweist.

6. Anlaßsperrsystem nach Anspruch 5, **dadurch gekennzeichnet, daß** nach Ablauf der Zeitstufe die Selbsthaltung beeendet wird, so daß der Funktionsblock (9) deaktiviert ist.

## Claims

1. Starter interlock system for a motor vehicle with an automatic gear box, in which starting of the vehicle is prevented if a selector lever (5) actuatable by a driver is located in a position other than parking or neutral, the starter interlock system having an ignition lock (S1) with a first and second position, a starter relay (6), a selector lever (5), an electrical position switch (2) with starter switch (3) and an electronic gear box control system (1), the position of the selector lever (5) being detected by the electrical position switch (2) and the electronic gear box control system (1) detecting the position of the selector lever (5) on the basis of the signals of the position switch (2), **characterized in that** two supply voltages are present at the electronic gear box control system (1), the first supply voltage (KL30) is permanently present, the second supply voltage (KL15) is present when the ignition lock (S1) is brought into the first position, the electronic gear box control system (1) is activated when the second supply voltage (KL15) is present, the electronic gear box control system (1) in the activated state supplies the position switch (2) and the starter switch (3) with electricity, the starter switch (3) not being activated if the signals (17) of the position switch (2) indicate a driving position, so that when the ignition lock (S1) is brought into the second position, the starter relay (6) remains deactivated, the starter switch (3) being located inside the automatic gear box, this switch being executed as a semiconductor switch and the electronic gear box control system (1) recognizing the state of the starter switch (3) via a checked-back variable.

2. Starter interlock system according to claim 1, **characterized in that** the electronic gear box control system (1) is activated by means of the first supply voltage (KL30) when the checked-back variable of the starter switch (3) shows that the ignition lock (S1) has been brought into the second position and at the same time a non-applied second voltage (KL15) is detected.

3. Starter interlock system according to claim 2, **characterized in that** the first (KL30) and second (KL15) supply voltage are connected to one another in the electronic gear box control system (1) via an OR operation.

4. Starter interlock system according to claim 3, **characterized in that** the electronic gear box control system (1) also has a function block (9), by means of which self-holding of the checked-back variable of the starter switch (3) is achieved.

5. Starter interlock system according to claim 4, **characterized in that** the function block (9) also has a time stage.

6. Starter interlock system according to claim 5, **characterized in that** on expiry of the time stage, the self-holding is terminated, so that the function block (9) is deactivated.

## Revendications

1. Système de verrouillage de démarrage pour un véhicule automobile équipé d'une transmission automatique, dans lequel le démarrage du véhicule est interdit lorsqu'un levier sélecteur (5) pouvant être actionné par le conducteur se trouve dans une position autre que la position de stationnement ou le point mort, le système de verrouillage de démarrage comprenant une serrure de contact d'allumage (S1) qui peut prendre une première et une deuxième position, un relais de démarreur (6), un levier sélecteur (5), un commutateur de position électrique (2) pourvu d'un commutateur de démarrage (3), et une commande électronique (1) de la transmission, la position du levier sélecteur (5) étant détectée par le commutateur de position électrique (2) et la commande électronique (1) de la transmission identifiant la position du levier sélecteur (5) sur la base des signaux du commutateur de position (2), **caractérisé en ce que** deux tensions d'alimentation sont appliquées à la commande électronique (1) de la transmission, la première tension d'alimentation (KL30) étant appliquée en permanence, la deuxième tension d'alimentation (KL15) étant appliquée lorsque la serrure de contact d'allumage (S1) est placée dans la première position, l'appareil électronique (1) de commande de la transmission est activé avec l'application de la deuxième tension d'alimentation (KL15), l'appareil de commande électronique (1) de la transmission met en circuit le commutateur de position (2) et le commutateur de démarrage (3) lorsqu'il est à l'état activé, le commutateur de démarrage (3) n'étant pas activé lorsque les signaux (17) du commutateur de position (2) indiquent une position de conduite, de sorte que, lorsque la serrure de contact d'allumage (S1) est mise dans la deuxième position, le relais de démarreur (6) reste désactivé, le commutateur de démarrage (3) se trouvant à l'intérieur de la transmission automatique, ce commutateur étant réalisé sous la forme d'un commutateur à semi-conducteur et la commande électronique (1) de la transmission identifiant l'état du commutateur de démarrage (3) au moyen d'une grandeur renvoyée en retour.

2. Système de verrouillage de démarrage selon la revendication 1, **caractérisé en ce que** la commande électronique (1) de la transmission est activée au moyen de la première tension d'alimentation (KL 30) lorsque la grandeur du commutateur de démarrage (3), renvoyée en retour, indique que la serrure de contact d'allumage (S1) a été placée dans la deuxième position et qu'on constate en même temps une deuxième tension d'alimentation (KL 15) n'est pas appliquée.

3. Système de verrouillage de démarrage selon la revendication 2, **caractérisé en ce que**, dans la commande électronique (1) de la transmission, la première tension d'alimentation (KL30) et la deuxième tension d'alimentation (KL15) sont connectées l'une à l'autre par un élément OU.

4. Système de verrouillage de démarrage selon la revendication 3, **caractérisé en ce que** la commande électronique (1) de la transmission comprend en outre un bloc fonctionnel (9) au moyen duquel se produit un maintien de la grandeur du commutateur de démarrage (3) renvoyée en retour.

5. Système de verrouillage de démarrage selon la revendication 4, **caractérisé en ce que** le bloc fonctionnel (9) comporte en outre un étage de temps.

6. Système de verrouillage de démarrage selon la revendication 5, **caractérisé en ce que**, après l'écoulement de l'étage de temps, le maintien est terminé, de sorte que le bloc fonctionnel (9) est désactivé.
